# EUROPÄISCHE PATENTSCHRIFT

(11) **EP 1 188 609 B1**
(45) Veröffentlichungstag und Bekanntmachung des Hinweises auf die Patenterteilung: **24.05.2006**
(21) Anmeldenummer: 01118782.0
(22) Anmeldetag: 08.08.2001
(51) Int. Cl.: B60N 3/00

(54) **Kleintisch für Fahrzeuge**
Tray for vehicles
Tablette pour véhicules

(30) Priorität: 23.08.2000 DE 10041252
(43) Veröffentlichungstag der Anmeldung: 20.03.2002
(73) Patentinhaber: Hüttlinger, Josef, 87789 Woringen (DE)
(72) Erfinder: Hüttlinger, Josef, 87789 Woringen (DE)

(56) Entgegenhaltungen:
- DE-U- 7 025 734
- DE-U- 7 703 540
- DE-U- 7 820 875
- GB-A- 1 151 940
- US-A- 2 856 251
- PATENT ABSTRACTS OF JAPAN vol. 2000, no. 05, 14. September 2000 (2000-09-14) & JP 2000 050962 A (PIKA CORPORATION:KK), 22. Februar 2000 (2000-02-22)

## Beschreibung

Die Erfindung betrifft einen Kleintisch zum Anbringen am Lenkrad eines Kraftfahrzeuges, mit einer Einhängevorrichtung zum Einhängen am Kranz des Lenkrades und mit einer Tischplatte, die mit Hilfe von an der Tischplatte und an der Einhängevorrichtung befindlichen Stützmitteln an der Einhängevorrichtung abstützbar ist.

Ein Kleintisch dieser Art ist durch das deutsche Gebrauchsmuster GM 70 25 734 bekannt. Die Einhängevorrichtung dieses Kleintisches wird durch einen U-förmigen Bügel gebildet, dessen Schenkel die nach unten zu einer Tischplatte führen, kreissegmentartig verbreitert und vom Lenkrad wegweisend abgewinkelt sind. Zu beiden Seiten der hinteren Seite der Tischplatte sind erste Stützmittel in Form von nach außen ragenden Zapfen vorgesehen, die in Durchbrüche eingreifen, die sich an den beiden kreissegmentartigen Bereichen der Schenkel befinden. Diese Bereiche weisen auch sägezahnartige Lücken auf, wobei pro Schenkel in jeweils eine der Lücken je ein Stützabschnitt der Tischplatte eingreift und somit eine weitere Gruppe von Stützmitteln bilden. Die Nützlichkeit dieses Kleintisches ist anzuerkennen, doch ist die Einhängevorrichtung selbst dann noch als kompliziertes Teil einzustufen, wenn die Einhängevorrichtung aus Kunststoff gefertigt ist. Um aufgrund der U-förmigen Gestaltung nicht labil zu sein, muss die Einhängevorrichtung relativ dickwandig ausgeführt sein, was sich zumindest nachteilig auf die Herstellkosten auswirkt.

Ein weiterer Kleintisch ist in der deutschen Gebrauchsmusterschrift GM 77 03 540 beschrieben. Die Stützmittel dieses Tisches, die ein Befestigen der Tischplatte an der Einhängevorrichtung erlauben, sind durch an der Tischplatte befindliche Zapfen und durch an der Einhängevorrichtung vorgesehene Schlitze gebildet, in welche die Zapfen der Tischplatte eingesteckt werden. Folgt man der Zeichnung in der genannten Schrift, sind die Zapfen im Vergleich zur Tiefe der Tischplatte sehr kurz. Auch die Wanddicke jenes Abschnittes der Einhängevorrichtung, welcher die Schlitze beherbergt, ist relativ dünn. Es muss somit befürchtet werden, dass bei relativ starkem Aufstützen auf die Tischplatte, bedingt durch die ungünstigen Hebelverhältnisse zwischen der Länge der Zapfen einerseits und der Tiefe der Tischplatte andererseits, entweder die Zapfen abbrechen oder die Schlitze ausreißen können.

Derartige Mängel vermeidet ein Kleintisch, der durch das deutsche Gebrauchsmuster GM 78 20 875 bekannt ist. Die Stützmittel sind bei diesem Tisch durch zwei flexible Bänder gebildet, welche die mit Vertiefungen ausgestattete Tischplatte in ihrer Gebrauchslage halten. Die Tischplatte kann nach oben in eine Nichtgebrauchslage bewegt werden, in der sie an der Einhängevorrichtung anliegt, wobei die flexiblen Stützmittel entsprechend ausweichen. Ein nicht zu unterschätzender Nachteil dieses Kleintisches besteht jedoch darin, dass sich das Anbringen von flexiblen Stützmitteln bekanntlich als fertigungstechnisch aufwendig erweist. Darüber hinaus ragen die Stützmittel störend in den Auflagebereich der Tischplatte, was ebenfalls als Nachteil zu betrachten ist.

Es ist Aufgabe der Erfindung, einen Kleintisch der hier vorliegenden Art so weiterzuentwickeln, dass dieser unter Vermeidung der eben geschilderten Nachteile insbesondere stabil gebaut ist, dass die Stützmittel in der Lage sind, auch größere Belastungen schadlos aufzunehmen und dass die Tischplatte an der Einhängevorrichtung leicht anzubringen und ebenso wieder leicht abnehmbar ist. Ferner soll der Kleintisch kostengünstig herstellbar sein.

Die Lösung der Aufgabe besteht darin, dass die an der Einhängevorrichtung vorgesehenen Stützmittel durch eine quer verlaufende Achsstrebe und durch eine quer verlaufende Stützstrebe gebildet sind und dass die Tischplatte zwischen der Achsstrebe und der Stützstrebe eingefügt oder einfügbar ist.

Der Vorteil der Erfindung zeigt sich insbesondere dann, wenn die Achsstrebe und die Stützstrebe Bestandteil eines einfachen, deshalb kostenkünstigen und in sich geschlossenen Rahmens sind, der, ebenso wie die Achsstrebe und die Stützstrebe aus metallischen Rundstäben gebildet ist, die zusammen die Einhängevorrichtung bilden. An der quer verlaufenden Achsstrebe und der quer verlaufenden Stützstrebe ist die Tischplatte eingefügt, wobei sich die Achsstrebe an der Oberseite der Tischplatte befindet und die Stützstrebe an der Unterseite der Tischplatte anliegt. Auf diese Weise kann die Tischplatte sehr stark belastet werden, ohne dass Beschädigungen insbesondere an der Einhängevorrichtung zu befürchten sind. Auch die auf die Tischplatte einwirkenden, durch die Stützstrebe auftretenden Flächenpressungen sind aufgrund der Länge der Stützstrebe gering. Da die Achsstrebe und die Stützstrebe in Gebrauchslage des Kleintisches höhen- und seitenversetzt angeordnet sind, kann bereits bei der einfachsten Ausführungsform eines Kleintisches die Tischplatte ohne zusätzliche Arretierungsmittel zwischen die Achsstrebe und die Stützstrebe so eingefügt werden, dass die Tischplatte mit ihrer hinteren quer verlaufenden Seite am Lenkrad anliegt und von der Achsstrebe und von der Stützstrebe abgestützt ist. Unabhängig von der Anordnung zum Lenkrad kann an der Oberseite der Tischplatte eine quer verlaufende Lagerung in Form einer Vertiefung vorgesehen sein, die in der Lage ist, die Achsstrebe der Einhängevorrichtung schnappschlüssig aufzunehmen, so dass auch bei dieser erweiterten Ausführungsform die Tischplatte leicht und schnell an der Einhängevorrichtung anbringbar und von dieser ebenso schnell wieder lösbar ist. Die Tischplatte liegt als KunststoffSpritzgußteil vor, was eine kostengünstige Fertigung garantiert.
Weitere vorteilhafte Ausbildungen des Kleintisches finden sich in der nachfolgenden Beschreibung sowie in den Unteransprüchen.

Die Erfindung wird anhand von Ausführungsbeispielen näher erläutert. Es zeigt
- Fig. 1: einen in Gebrauchslage befindlichen, am Lenkrad eines Kraftfahrzeuges eingehängten Kleintisch;
- Fig. 2: eine Einhängevorrichtung und eine Tischplatte;
- Fig. 3: eine Tischplatte mit Vertiefungen für die Achsstrebe;
- Fig. 4: einen Kleintisch in platzsparender Nichtgebrauchslage sowie
- Fig. 5: und Fig. 6 zweckmäßige Ausführungsformen der Tischplatte.

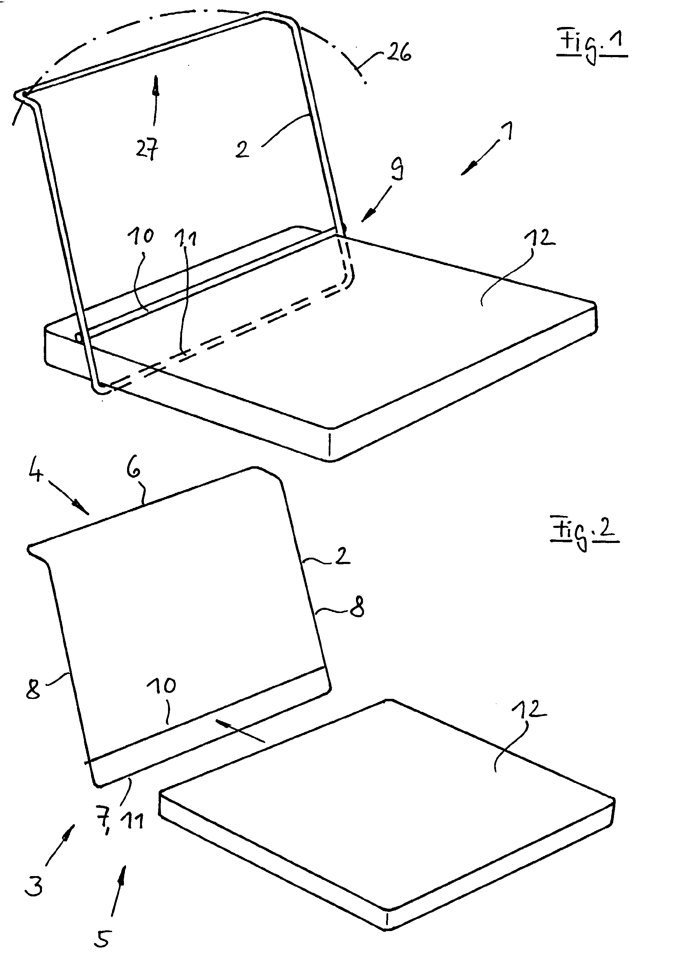

Fig. 1 zeigt einen Kleintisch 1 einfachster Bauart. Der Kleintisch 1 weist eine Einhängevorrichtung 2 auf, die am Kranz 26 des Lenkrades eines Kraftfahrzeuges von oben her eingehängt ist. Zwischen die Einhängevorrichtung 2 ist eine Tischplatte 12 eingefügt und durch Stützmittel 9 in der Gebrauchslage (wie gezeichnet) gehalten. Ein Kleintisch 1 dieser Bauweise wird demnach lediglich durch eine Einhängevorrichtung 2 und durch eine einfache Tischplatte 12 gebildet, die zwischen die an der Einhängevorrichtung 2 befindlichen Stützmittel 9 einfügbar ist.

Fig. 2 zeigt als separate Teile die in Fig. 1 beschriebene Einhängevorrichtung 2 und die Tischplatte 12. Die Einhängevorrichtung 2 ist zweckmäßigerweise aus Stäben mit rundem Querschnitt gebildet. Im Beispiel weist die Einhängevorrichtung einen in sich geschlossenen stabförmigen Rahmen 3 auf, der eine rechteckige oder quadratische Form besitzt. Der obere Bereich 4 des Rahmens 3 ist zum Lenkrad 26 hin abgebogen, so dass im auf das Lenkrad 26 aufgesetztem Zustand die obere Querverbindung 6 des Rahmens 3 und damit der Einhängevorrichtung 2 den oberen Abschnitt 27 des Lenkrades 26 hintergreift, wobei die nach unten führenden, außerhalb der Tischplatte 12 befindlichen Seitenabschnitte 8 des Rahmens 3 am Lenkrad 26 anliegen. Im unteren Bereich 5 des Rahmens 3 und in einem Abstand zur unteren Querverbindung 7 ist eine quer verlaufende, horizontal angeordnete Achsstrebe 10 vorgesehen, welche mit je einem Seitenabschnitt 8 ortsfest verbunden ist und deren weitere Bedeutung nachfolgend noch beschrieben ist. Die untere Querverbindung 7, die am Rahmen 3 entweder angeformt oder auch angeschweißt werden kann, dient als querverlaufende, horizontal angeordnete Stützstrebe 11. In der Zeichnung ist die Einhängevorrichtung 2 in der nach vorne zum Lenkrad 26 hin geneigten Lage dargestellt. Die Tischplatte 12 nimmt eine waagrechte Lage ein. Bei Gebrauch des Kleintisches 1 wird die Tischplatte 12 in Pfeilrichtung zwischen die Achsstrebe 10 und die Stützstrebe 11 eingefügt, wobei die Abstützung der Tischplatte 12 dadurch möglich ist, dass die Achsstrebe 10 und die Stützstrebe 11, welche die Stützmittel 9 bilden, nicht nur höhenversetzt, sondern auch, bezogen auf eine Vertikale, seitenversetzt angeordnet sind. In dieser Gebrauchslage kann die Tischplatte 12 nicht weiter (in der Zeichnung rechtsdrehend) nach unten bewegt werden. Wohl aber ist es aufgrund der gewählten Geometrie möglich, die Tischplatte 12 etwas nach oben zu verschwenken, so dass diese leicht von der Einhängevorrichtung 2 gelöst werden kann.

Fig. 3 zeigt geschnitten und in Seitenansicht eine bevorzugte Ausbildung einer Tischplatte 12. Zumindest an der Oberseite 13, gewöhnlich auch an der Unterseite 14 der Tischplatte 12 ist wenigstens eine quer verlaufende Lagerung 17 in Form einer Vertiefung 18 vorgesehen. Die mindestens eine Vertiefung 18 ist zur bevorzugt form- und schnappschlüssigen Aufnahme der Achsstrebe 10 der Einhängevorrichtung 2 bestimmt. In der Zeichnung befindet sich die Achsstrebe 10 in der an der Oberseite 13 befindlichen Vertiefung 18, während die Stützstrebe 11 an der Unterseite 14 der Tischplatte 12 höhen- und seitenversetzt zur Achsstrebe 10 anliegt. Das Anbringen von wenigstens einer Vertiefung 18 an der Oberseite 13 und an der Unterseite 14 empfiehlt sich dann, wenn z.B. die Oberseite 13 der Tischplatte 12 anders gestaltet ist als deren Unterseite 14. Die Tischplatte 12 kann somit entweder mit der Oberseite 13 nach oben oder mit der Unterseite 14 nach oben zeigend in die Einhängevorrichtung eingefügt werden. Durch die Vertiefungen 18 kann die Tischplatte 12 in wenigstens zwei unterschiedlichen vorbestimmten Positionen an der Einhängevorrichtung 2 befestigt werden.

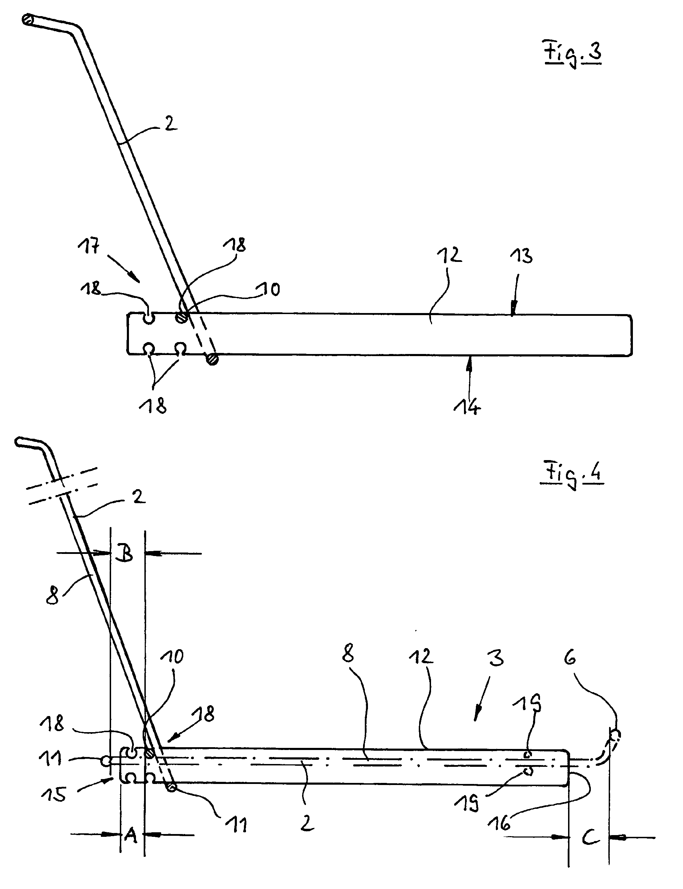

Bei Verwendung von wenigstens einer Vertiefung 18 ist es möglich, und wie in Fig. 4 in einer Seitenansicht gezeigt, den Kleintisch 1 nach dem Abnehmen vom Lenkrad 26 in eine raumsparende Nichtgebrauchslage zu bringen. Danach lässt sich die in Gebrauchslage befindliche Einhängevorrichtung 2 in eine parallel zur Tischplatte 12 befindliche Lage verschwenken (strichpunktiert gezeichnet), wobei die in der Vertiefung 18 befindliche Achsstrebe 10 als Drehachse dient. Damit dies möglich ist, ist der lichte Abstand zwischen der Achsstrebe 10 und der Stützstrebe 11 (Maß B) größer gewählt als die Strecke A, die sich aus der Entfernung der hinteren, am Lenkrad 26 gelegenen Seite 15 der Tischplatte 12 zur Vertiefung 18 ergibt, in der die Achsstrebe 10 drehbar gelagert ist. Dabei ist es zweckmäßig, die Einhängevorrichtung 2 so zu gestalten, dass in deren Nichtgebrauchslage die obere Querverbindung 6 in einem Abstand C zur vorderen, dem Fahrer zugewandten Seite 16 angeordnet ist. Vorteilhaft ist es, wenn an der Tischplatte 12 kleine Rastmittel 19, etwa kleine Erhöhungen vorgesehen sind, welche die Seitenabschnitte 8 des Rahmens 3 in Nichtgebrauchslage der Einhängevorrichtung 2 lösbar arretieren.

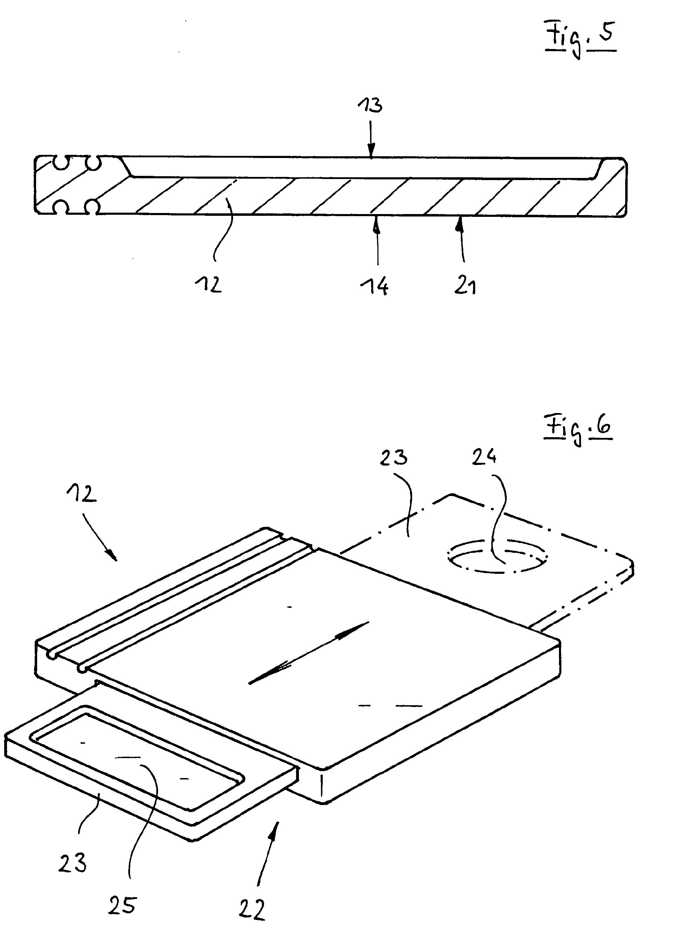

In Fig. 5 ist eine mit unterschiedlicher Ober- und Unterseite 13, 14 gestaltete Tischplatte 12 in Schnittdarstellung und in Seitenansicht gezeigt. Im Beispiel weist die Oberseite 13, wie bei einem Teller eine leichte Vertiefung auf. In dieser Lage kann der Kleintisch 1 zum Abstellen von kleinen Speisen benutzt werden. Die Unterseite 14 der Tischplatte 12 ist bei diesem Ausführungsbeispiel als ebene glatte Fläche 21 gestaltet. Dreht man die Tischplatte 12 so, dass die Unterseite 14 oben liegt und fügt die Tischplatte 12 an der Einhängevorrichtung 2 wieder ein, kann die jetzt oben liegende Unterseite 14 als Schreibunterlage benützt werden.

Ein weiteres zweckmäßiges Ausführungsbeispiel einer Tischplatte 12 zeigt Fig.6. Die Tischplatte 12 weist wenigstens einen breiten, quer verlaufenden Durchbruch 22 auf, in dem wenigstens eine Ausziehplatte 23 untergebracht ist. Die Ausziehplatte 23 ist durch nicht dargestellte Sicherungsmittel im Durchbruch verschiebbar (Doppelpfeil) so gelagert, dass sie aus dem Durchbruch 22 ein Stück weit nach rechts oder ein Stück weit nach links herausziehbar ist. Beispielhaft ist an der rechten Seite der Ausziehplatte 23 ein senkrechter runder Durchbruch 24 vorgesehen, in den zum Beispiel ein Trinkbecher einsetzbar ist. Ebenfalls beispielhaft weist die linke Seite der Ausziehplatte 23 eine schalenhafte Vertiefung 25 auf, in der beispielsweise Schreibmaterial abgelegt werden kann.
Es soll an dieser Stelle vermerkt werden, dass die Tischplatte 12 für den hier vorgeschlagenen Kleintisch 1 mehr als nur jene Ausführungsformen aufweisen kann, die bis hierher beschrieben worden sind. Die gezeigten Ausführungsbeispiele sollen lediglich den Hauptzweck des Kleintisches 1 verdeutlichen. Der Kleintisch 1 ist insbesondere für solche Personen geeignet, die im Außendienst mit dem Auto unterwegs sind. Man kann den Kleintisch 1, während man auf dem Fahrersitz sitzt, als kleinen Schreibtisch nutzen. Ebenso ist es möglich, den Kleintisch 1 zum Einnehmen einer kleinen Mahlzeit zu verwenden und da die Tischplatte 12 auf einfachste Weise von der Einhängevorrichtung 2 abnehmbar ist, kann die Tischplatte 12 sogar in einer Spülmaschine gereinigt werden.
Abschließend soll nicht unerwähnt bleiben, dass die Tischplatte 12 auch zu einem Laptop weiterentwickelt sein kann, so dass dieses im Auto bequem bedienbar ist, ohne dass man den Fahrersitz verlassen muss.

## Patentansprüche

1. Kleintisch (1) zum Anbringen am Lenkrad (26) eines Kraftfahrzeuges, mit einer Einhängevorrichtung (2) zum Einhängen am Kranz des Lenkrades (26) und mit einer Tischplatte (12), die mit Hilfe von an der Tischplatte (12) und an der Einhängevorrichtung (2) befindlichen Stützmitteln (9) an der Einhängevorrichtung (2) abstützbar ist, **dadurch gekennzeichnet, dass** die an der Einhängevorrichtung (2) vorgesehenen Stützmittel (9) durch eine quer verlaufende Achsstrebe (10) und durch eine quer verlaufende Stützstrebe (11) gebildet sind und dass die Tischplatte (12) zwischen der Achsstrebe (10) und der Stützstrebe (11) eingefügt oder einfügbar ist.

2. Kleintisch nach Anspruch 1, **dadurch gekennzeichnet, dass** die Achsstrebe (10) und die Stützstrebe (11) horizontal angeordnet sind.

3. Kleintisch nach Anspruch 1 oder 2, **dadurch gekennzeichnet, dass** in Gebrauchslage der Einhängevorrichtung (2) die Achsstrebe (10) zur Stützstrebe (11) höhen- und seitenversetzt angeordnet ist.

4. Kleintisch nach einem der Ansprüche 1 bis 3, **dadurch gekennzeichnet, dass** bei der Einhängevorrichtung (2) zumindest die Achsstrebe (10) stabförmig mit rundem Querschnitt gestaltet ist.

5. Kleintisch nach einem der Ansprüche 1 bis 4, **dadurch gekennzeichnet, dass** die Einhängevorrichtung (2) als geschlossener Rahmen (3) ausgebildet ist.

6. Kleintisch nach einem der Ansprüche 1 bis 5, **dadurch gekennzeichnet, dass** die Oberseite (13) der Tischplatte (12) wenigstens eine Lagerung (17) in Form einer quer verlaufenden Vertiefung (18) aufweist, die zur Aufnahme der Achsstrebe (10) bestimmt ist.

7. Kleintisch nach einem der Ansprüche 1 bis 6, **dadurch gekennzeichnet, dass** an der Unterseite (14) der Tischplatte (12) wenigstens eine weitere quer verlaufende Vertiefung (18) vorgesehen ist.

8. Kleintisch nach einem der Ansprüche 6 oder 7, **dadurch gekennzeichnet, dass** die wenigstens eine Vertiefung (18) einen Querschnitt aufweist, der eine form- und schnappschlüssige Verbindung mit der Achsstrebe (10) erlaubt.

9. Kleintisch nach einem der Ansprüche 1 bis 8, **dadurch gekennzeichnet, dass** die Tischplatte (12) in mehr als einer vorbestimmten Position an der Einhängevorrichtung (2) anbringbar ist.

10. Kleintisch nach einem der Ansprüche 1 bis 9, **dadurch gekennzeichnet, dass** der lichte Abstand zwischen der Achsstrebe (10) und der Stützstrebe (11) größer ist als der Abstand zwischen der zur Aufnahme der Achsstrecke (10) bestimmten Vertiefung (18) und der hinteren Seite (15) der Tischplatte (12).

11. Kleintisch nach einem der Ansprüche 1 bis 10, **dadurch gekennzeichnet, dass** in Nichtgebrauchslage der Einhängevorrichtung (2) deren obere Querverbindung (6) in einem Abstand zur vorderen Seite (16) der Tischplatte (12) angeordnet ist.

12. Kleintisch nach einem der Ansprüche 1 bis 11, **dadurch gekennzeichnet, dass** an der Tischplatte (12) kleine Rastmittel (19) vorgesehen sind, welche die Seitenabschnitte (8) in Nichtgebrauchslage der Einhängevorrichtung (2) lösbar arretieren.

13. Kleintisch nach einem der Ansprüche 1 bis 12, **dadurch gekennzeichnet, dass** die Oberseite (13) und die Unterseite (14) der Tischplatte (12) unterschiedlichen Verwendungszwecken dienend, verschiedenartig gestaltet sind.

14. Kleintisch nach einem der Ansprüche 1 bis 13, **dadurch gekennzeichnet, dass** die Tischplatte (12) wenigstens einen quer verlaufenden Durchbruch (22) zur verschiebbaren Aufnahme von mindestens einer Ausziehplatte (23) aufweist.

15. Kleintisch nach Anspruch 14, **dadurch gekennzeichnet, dass** die wenigstens eine Ausziehplatte (23) in zwei entgegengesetzte Richtungen begrenzt bewegbar ist.

16. Kleintisch nach Anspruch 14 oder 15, **dadurch gekennzeichnet, dass** die Ausziehplatte (23) einen Durchbruch (24) aufweist, der zur Aufnahme eines Trinkbechers geeignet ist.

17. Kleintisch nach einem der Ansprüche 1 bis 13, **dadurch gekennzeichnet, dass** die Tischplatte (12) zu einem Laptop weiterentwickelt ist.

## Claims

1. A small table (1) for mounting on the steering wheel (26) of a motor vehicle, having a suspension device (2) for suspension on the rim of the steering wheel (26) and having a tray (12) which may be supported on the suspension device (2) with the aid of supporting means (9) located on the tray (12) and on the suspension device (2), **characterised in that** the supporting means (9) provided on the suspension device (2) are formed by a transversely extending axial bar (10) and by a transversely extending supporting bar (11), and **in that** the tray (12) is inserted or insertable between the axial bar (10) and the supporting bar (11).

2. A small table (1), **characterised in that** the axial bar (10) and the supporting bar (11) are arranged horizontally.

3. A small table according to Claim 1 or 2, **characterised in that**, in the position of use of the suspension device (2), the axial bar (10) is arranged such that it is offset vertically and laterally with respect to the supporting bar (11).

4. A small table according to one of Claims 1 to 3, **characterised in that**, in the suspension device (2), at least the axial bar (10) is constructed in the shape of a rod with a circular cross-section.

5. A small table according to one of Claims 1 to 4, **characterised in that** the suspension device (2) is constructed as a closed frame (3).

6. A small table according to one of Claims 1 to 5, **characterised in that** the upper side (13) of the tray (12) has at least one bearing (17) in the form of a transversely extending depression (18) intended to receive the axial bar (10).

7. A small table according to one of Claims 1 to 6, **characterised in that** at least one further transversely extending depression (18) is provided on the underside (14) of the tray (12).

8. A small table according to one of Claims 6 or 7, **characterised in that** the at least one depression (18) has a cross-section which enables a form-fitting and snap-fitting connection with the axial bar (10).

9. A small table according to one of Claims 1 to 8, **characterised in that** the tray (12) may be mounted in more than one pre-determined position on the suspension device (2).

10. A small table according to one of Claims 1 to 9, **characterised in that** the clearance between the axial bar (10) and the supporting bar (11) is greater than the spacing between the depression (18) intended to receive the axial section (10) and the rear side (15) of the tray (12).

11. A small table according to one of Claims 1 to 10, **characterised in that**, in the position in which the suspension device (2) is not in use, its upper transverse connection (6) is arranged at a spacing from the front side (16) of the tray (12).

12. A small table according to one of Claims 1 to 11, **characterised in that** small latching means (19) are provided on the tray (12), which releasably lock the side portions (8) in the position in which the suspension device (2) is not in use.

13. A small table according to one of Claims 1 to 12, **characterised in that** the upper side (13) and the lower side (14) of the tray (12) are constructed differently, serving different application purposes.

14. A small table according to one of Claims 1 to 13, **characterised in that** the tray (12) has at least one transversely extending opening (22) for displaceably receiving at least one pull-out tray (23).

15. A small table according to Claim 14, **characterised in that** the at least one pull-out tray (23) is capable of limited movement in two opposing directions.

16. A small table according to Claim 14 or 15, **characterised in that** the pull-out tray (23) has an opening (24) which is suitable for receiving a drinking cup.

17. A small table according to one of Claims 1 to 13, **characterised in that** the tray (12) is further developed into a laptop.

## Revendications

1. Tablette (1) destinée à être fixée sur le volant (26) d'un véhicule automobile, comprenant un dispositif d'accrochage (2) pour l'accrocher au pourtour du volant (26) et un plateau (12) pouvant venir prendre appui sur le dispositif d'accrochage (2) à l'aide de moyens d'appui (9) situés sur le plateau (12) et sur le dispositif d'accrochage (2), **caractérisée en ce que** les moyens d'appui (9) prévus sur le dispositif d'accrochage (2) sont constitués par une entretoise axiale (10) s'étendant transversalement et par une entretoise d'appui (11) s'étendant transversalement, et **en ce que** le plateau (12) est inséré ou peut être inséré entre l'entretoise axiale (10) et l'entretoise d'appui (11).

2. Tablette selon la revendication 1, **caractérisée en ce que** l'entretoise axiale (10) et l'entretoise d'appui (11) sont disposées horizontalement.

3. Tablette selon la revendication 1 ou 2, **caractérisée en ce que**, lorsque le dispositif d'accrochage (2) est en position d'utilisation, l'entretoise axiale (10) est fixée de manière décalée vers le haut et vers le côté par rapport à l'entretoise d'appui (11).

4. Tablette selon l'une des revendications 1 à 3, **caractérisée en ce qu'**au niveau du dispositif d'accrochage (2), au moins l'entretoise axiale (10) à la forme d'une tige de section ronde.

5. Tablette selon l'une des revendications 1 à 4, **caractérisée en ce que** le dispositif d'accrochage (2) est réalisé en tant que cadre fermé (3).

6. Tablette selon l'une des revendications 1 à 5, **caractérisée en ce que** le dessus (13) du plateau (12) présente au moins un palier (17) sous la forme d'un renfoncement (18) s'étendant transversalement, qui est destiné à recevoir l'entretoise axiale (10).

7. Tablette selon l'une des revendications 1 à 6, **caractérisée en ce qu'**au moins un renfoncement supplémentaire (18) est prévu sur le dessous (14) du plateau (12).

8. Tablette selon la revendication 6 ou 7, **caractérisée en ce qu'**au moins l'unique renfoncement (18) présente une section transversale permettant une liaison par engagement positif et par enclenchement avec l'entretoise axiale (10).

9. Tablette selon l'une des revendications 1 à 8, **caractérisée en ce que** le plateau (12) peut être mis dans plus d'une position prédéfinie sur le dispositif d'accrochage (2).

10. Tablette selon l'une des revendications 1 à 9, **caractérisée en ce que** l'écart entre l'entretoise axiale (10) et l'entretoise d'appui (11) est supérieur à l'écart entre le renfoncement (18) destiné à recevoir l'entretoise axiale (10) et la face arrière (15) du plateau (12).

11. Tablette selon l'une des revendications 1 à 10, **caractérisée en ce que** lorsque le dispositif d'accrochage (2) est en position de non utilisation, sa branche de jonction transversale supérieure (6) est disposé à distance de la face avant (16) du plateau (12).

12. Tablette selon l'une des revendications 1 à 11, **caractérisée en ce que** de petits moyens d'enclenchement (19) sont prévus sur le plateau (12), qui bloquent de façon amovible les segments latéraux (8) lorsque le dispositif d'accrochage (2) est en position de non utilisation.

13. Tablette selon l'une des revendications 1 à 12, **caractérisée en ce que** le dessus (13) et le dessous (14) du plateau (12), qui ont des utilités différentes, sont réalisés différemment.

14. Tablette selon l'une des revendications 1 à 13, **caractérisée en ce que** le plateau (12) présente au moins un passage (22) s'étendant transversalement pour recevoir de manière coulissable au moins une rallonge télescopique (23).

15. Tablette selon la revendication 14, **caractérisé en ce qu'**au moins l'unique rallonge télescopique (23) est mobile de façon limitée dans deux sens opposés.

16. Tablette selon la revendication 14 ou 15, **caractérisé en ce que** la rallonge télescopique (23) présente une ouverture (24) destinée à recevoir un gobelet.

17. Tablette selon l'une des revendications 1 à 13, **caractérisée en ce que** le plateau (12) peut être remplacé par un ordinateur portable.
